# FASCICULE DE BREVET EUROPEEN

(11) **EP 3 609 771 B1**
(45) Date de publication et mention de la délivrance du brevet: **18.01.2023**
(21) Numéro de dépôt: 18720978.8
(22) Date de dépôt: 09.04.2018
(51) Int. Cl.: B62D 21/18, B62D 37/00, B62D 61/04, B62D 61/12, B62D 63/02

(54) **CHARIOT À GUIDAGE AUTOMATIQUE POUR LE TRANSPORT ET/OU LA MANUTENTION D'UNE CHARGE**
AUTOMATISCH GEFÜHRTER WAGEN ZUM TRANSPORTIEREN UND/ODER HANDHABEN EINER LAST
AUTOMATICALLY GUIDED TROLLEY FOR TRANSPORTING AND/OR HANDLING A LOAD

(30) Priorité: 14.04.2017 FR 1753292
(43) Date de publication de la demande: 19.02.2020
(73) Titulaire: EXOTEC, 59170 Croix (FR)
(72) Inventeur: MOULIN, Romain, 59000 Lille (FR); HEITZ, Renaud, 59650 Villeneuve D'Ascq (FR)
(74) Mandataire: Ermeneux, Bertrand
(86) Numéro de dépôt international: PCT/EP2018/059020
(87) Numéro de publication internationale: WO 2018/189106

(56) Documents cités:
- FR-A1- 2 818 624
- JP-A- S59 114 156
- JP-A- 2004 249 895
- US-A- 4 515 235

## Description

### 1. Domaine de l'invention

Le domaine de l'invention est celui de la logistique.

Plus précisément, l'invention concerne un chariot à guidage automatique.

L'invention trouve notamment une application dans la manutention et le transport de pièces ou de produits en entrepôt

### 2. État de la technique

La croissance importante du commerce en ligne a directement impacté les stratégies de gestion des flux de commande et la manipulation des produits au sein d'un entrepôt logistique.

Il est bien connu d'automatiser les tâches de transport dans un entrepôt pour gagner en vitesse d'acheminement.

Ainsi, on a pensé à utiliser des chariots autoguidés pour transporter des caisses contenant des produits jusqu'à une zone de préparation de commandes. On connaît également des chariots autoguidés utilisés pour transporter des rayonnages d'un entrepôt jusqu'à un point de collecte de produit par un opérateur dans ces rayonnages.

Bien souvent, le châssis de ces chariots autoguidés est relié par des suspensions à quatre roues.

Un inconvénient des chariots autoguidés connus est que leur mobilité est affectée lorsque la charge sur les différentes roues du chariot n'est pas équilibrée du fait d'une répartition non uniforme des produits dans la caisse ou sur l'étagère qui est transportée, où lorsqu'ils roulent sur un sol irrégulier.

Par ailleurs, afin d'éviter qu'en l'absence de charge à transporter, l'adhérence des roues sur le sol soit fortement réduite, et limite les capacités d'accélération et de décélération du chariot, on cherche par ailleurs à alourdir le chariot autoguidé pour pré-comprimer les suspensions.

Ceci présente l'inconvénient d'augmenter l'énergie nécessaire pour déplacer le chariot et donc de réduire son autonomie.

Un autre inconvénient de ces chariots autoguidés connus est que lorsque la charge est trop importante, les suspensions se retrouvent comprimées à leur maximum. La répartition du poids de la charge portée par le plateau est alors transmise telle quelle aux roues. On ne peut alors pas répartir le poids de la charge sur chacune des roues.

Parmi ces chariots à guidage automatique connus, certains peuvent être configurés pour avoir des essieux montés sur boggies, disposés l'un à l'avant, l'autre à l'arrière d'une caisse ou voiture.

Cette technique de chariot autoguidé sur boggie présente les mêmes inconvénients que les techniques précédentes.

Un autre inconvénient de ces chariots autoguidés sur boggie est qu'ils ne peuvent pas tourner sur eux-mêmes.

On connait également du document JP 2004 249895 A et du document JPS59 114156 A un chariot à guidage automatique comprenant deux balanciers montés pivotants par rapport au châssis du chariot et équipés chacun d'une roue folle à une extrémité d'un de leur bras. Le document JP S59 114156 A décrit un chariot comprenant un châssis principal et un châssis porteur comprenant un premier balancier et un deuxième balancier s'étendant respectivement vers l'avant et l'arrière dudit chariot. Ledit premier balancier et ledit deuxième balancier sont montés pivotants par rapport au châssis principal respectivement autour d'un premier axe et d'un deuxième axe. Ledit premier balancier présente un premier bras s'étendant à partir dudit premier axe en direction de l'extérieur dudit chariot, équipé d'au moins une roue folle, et un deuxième bras s'étendant à partir dudit premier axe en direction de l'intérieur dudit chariot, monté sur deux roues à entraînement différentiel. Ledit deuxième balancier présente un premier bras s'étendant à partir dudit deuxième axe en direction de l'extérieur dudit chariot, équipé d'au moins une roue folle et un deuxième bras s'étendant à partir dudit deuxième axe en direction de l'intérieur dudit chariot. Le chariot comprend aussi des moyens de solidarisation du deuxième bras dudit deuxième balancier avec le deuxième bras dudit premier balancier. Dans le document JPS59 114156A, les balanciers sont articulés par rapport au châssis par l'intermédiaire d'une biellette et d'une rotule et les deux balanciers sont articulés entre eux par une liaison pivot.

### 1. Objectifs de l'invention

L'invention a donc notamment pour objectif de pallier les inconvénients de l'état de la technique cités ci-dessus.

Plus précisément l'invention a pour objectif de fournir un chariot à guidage automatique pour le transport et/ou la manutention d'une charge dont toutes les roues adhèrent convenablement au sol, que le chariot soit en charge ou à vide.

Un autre objectif de l'invention est de fournir une telle technique de chariot à guidage automatique dans laquelle l'adhérence des roues au sol est directement proportionnelle au poids transporté.

Un objectif de l'invention est également de proposer une telle technique de chariot à guidage automatique qui maintienne le niveau d'adhérence des roues motrices, quelle que soit la répartition de la charge transportée.

Un objectif de l'invention est également de proposer une telle technique de chariot à guidage automatique qui maintienne le niveau d'adhérence des roues motrices, quelle que soit la répartition de la charge transportée.

Un autre objectif de l'invention est de fournir une telle technique de chariot à guidage automatique qui limite les problèmes de transfert de charge lors des phases d'accélération et de décélération.

L'invention a également pour objectif de proposer une technique de chariot à guidage automatique dont l'autonomie en énergie est accrue.

Encore un objectif de l'invention est de fournir une telle technique de chariot à guidage automatique qui soit simple à mettre en œuvre, fiable et d'un coût de revient réduit.

### 4. Exposé de l'invention

Ces objectifs, ainsi que d'autres qui apparaîtront par la suite sont atteints à l'aide d'un chariot à guidage automatique pour le transport et/ou la manutention d'une charge, comprenant un châssis principal destiné à recevoir ladite charge et un châssis porteur comprenant un premier balancier et un deuxième balancier s'étendant respectivement vers l'avant et l'arrière dudit chariot ou vice-versa.

L'invention concerne ainsi un véhicule autoguidé, aussi connu sous l'acronyme AGV (acronyme de « Automated guided vehicle » en anglais). Ce véhicule autoguidé peut être équipé d'un ou plusieurs bras de préhension d'objets, sans sortir du cadre de l'invention.

Il convient de noter que dans l'ensemble de la description de la présente demande de brevet, on se réfère à une direction d'avance du chariot lorsqu'on emploie les termes avant, arrière, droite et gauche du chariot.

Un chariot à guidage automatique pour le transport et/ou la manutention d'une charge selon l'invention, comprend un châssis principal destiné à recevoir ladite charge, ledit châssis principal étant formé d'un cadre périphérique présentant deux traverses reliant deux longerons latéraux, d'un châssis porteur, le chariot comprenant un premier balancier et un deuxième balancier s'étendant respectivement vers l'avant et l'arrière dudit chariot ou vice-versa. Ledit premier balancier et ledit deuxième balancier sont montés pivotants par rapport au châssis principal respectivement autour d'un premier axe et d'un deuxième axe, ledit premier axe et ledit deuxième axe étant fixés à un longeron latéral dudit châssis principal,ledit premier balancier présentant un premier bras s'étendant à partir dudit premier axe en direction de l'extérieur dudit chariot, équipé d'au moins une roue folle, et un deuxième bras s'étendant à partir dudit premier axe en direction de l'intérieur dudit chariot, monté sur deux roues à entraînement différentiel, ledit deuxième balancier présentant un premier bras s'étendant à partir dudit deuxième axe en direction de l'extérieur dudit chariot, équipé d'au moins une roue folle et un deuxième bras s'étendant à partir dudit deuxième axe en direction de l'intérieur dudit chariot, Le chariot comprend des moyens de solidarisation du deuxième bras dudit deuxième balancier avec le deuxième bras dudit premier balancier comprenant:
- des moyens d'appui dudit deuxième bras dudit deuxième balancier sur le deuxième bras dudit premier balancier comprenant un doigt s'étendant sensiblement perpendiculairement au deuxième bras dudit deuxième balancier, ou vice-versa au deuxième bras dudit premier balancier, ledit doigt pénétrant au moins partiellement dans une lumière formée dans ledit deuxième bras dudit premier balancier, ou vice versa dans ledit deuxième bras dudit deuxième balancier, plus large que ledit doigt, ou
- le deuxième balancier est solidarisé au premier balancier à l'aide d'au moins une bielle verticale qui transmet les efforts de contre réaction du deuxième balancier sur le premier balancier selon l'axe vertical.

Ainsi, de façon inédite, l'invention propose de mettre en œuvre deux balanciers pour répartir le poids de la charge portée par le châssis principal de manière uniforme entre les roues à entraînement différentiel et les roues folles, quelle que soit cette charge.

La mise en œuvre des balanciers permet en outre de limiter le poids du chariot à guidage automatique, ce qui lui confère de meilleures performances en termes d'autonomie et de vitesse de déplacement notamment.

En outre, la répartition de charge s'effectue de manière équivalente entre l'avant et l'arrière, mais également entre la droite et la gauche du chariot.

On notera par ailleurs, qu'ainsi, l'assemblage du châssis principal avec le châssis porteur est sensiblement isostatique.

Selon un aspect particulier de l'invention, les roues à entraînement différentiel sont montées dans le plan transversal du chariot, ou en d'autres termes le plan médian vertical orthogonal à l'axe longitudinal du chariot à guidage automatique, afin d'augmenter l'adhérence de celles-ci et ainsi optimiser le transfert du couple moteur au sol.

On obtient ainsi une façon simple et peu couteuse d'exercer un appui sur le deuxième bras du deuxième balancier, ou sur le deuxième bras dudit premier balancier, de façon réversible soit vers le bas soit vers le haut.

Selon un aspect particulier de l'invention, ladite lumière est de forme sensiblement oblongue et s'étend sensiblement dans la direction longitudinale du deuxième bras dans lequel elle est formée.

Ainsi, lorsque le balancier portant le doigt pivote autour de son axe de pivotement par rapport au châssis principal, le doigt parcourt un arc de cercle et se déplace dans la lumière en poussant sur l'une des faces intérieures de cette dernière.

Dans un mode de réalisation particulier de l'invention, ledit doigt comprend un galet destiné à venir en appui sur les bords de ladite lumière.

Ainsi, on limite le frottement du doigt dans la lumière ce qui réduit l'usure du doigt et/ou de la lumière.

Selon un mode de réalisation préférentiel de l'invention, lesdits moyens d'appui sont logés sensiblement à la verticale de l'axe des roues à entrainement différentiel.

Selon un mode de réalisation particulier de l'invention, lesdits moyens d'appui sont logés sous l'axe desdites deux roues à entraînement différentiel.

Selon un mode de réalisation particulièrement avantageux de l'invention, un chariot à guidage automatique tel que décrit ci-dessus comprend au moins une butée montée sur ledit châssis principal en vis-à-vis d'un desdits balanciers, destinée à limiter le débattement du châssis porteur par rapport au châssis principal.

Ainsi, on évite que les roues à entraînement différentiel viennent en contact avec la structure du chariot, au passage de bosses ou de trous sur le sol, et s'usent prématurément par frottement avec celle-ci.

Selon un mode de réalisation préférentiel de l'invention, les deux roues à entraînement différentiel sont entraînées en rotation par deux moteurs commandés de façon indépendante, fixés au même balancier que les roues à entraînement différentiel.

Ainsi, le chariot à guidage automatique est apte à tourner sur lui-même pour effectuer un changement de direction.

Selon un mode de réalisation avantageux de l'invention, au moins un des balanciers est équipé de deux roues folles montées sur celui-ci dans des positions symétriques par rapport au plan sagittal du chariot

En écartant les deux roues folles du plan sagittal, le chariot peut alors être guidé par un dispositif de guidage au sol, telle une ligne le long de laquelle il se déplace à cheval.

On entend ici par plan sagittal le plan médian vertical qui passe par l'axe longitudinal du chariot.

Selon un aspect avantageux de l'invention, la position dudit premier axe et la position dudit deuxième axe sont symétriques par rapport au plan médian dudit chariot.

De façon avantageuse, le premier axe et/ou le deuxième axe sont à mi-distance entre l'axe des roues motrices et l'axe de la roue folle qui équipe le premier balancier, respectivement le deuxième balancier.

### 5. Liste des figures

D'autres caractéristiques et avantages de l'invention apparaîtront plus clairement à la lecture de la description suivante d'un mode de réalisation de l'invention, donné à titre de simple exemple illustratif et non limitatif, et des dessins annexés parmi lesquels :
- La figure 1 est une vue en perspective d'un exemple de mode de réalisation d'un chariot à guidage automatique selon l'invention ;
- La figure 2 est une vue en perspective du dessous du chariot à guidage automatique présenté en référence à la figure 1 ;
- La figure 3 est une vue d'un côté du chariot à guidage automatique présenté en référence à la figure 1.

### 6. Description détaillée de l'invention

### 6.1. Premier exemple de mode de réalisation de l'invention

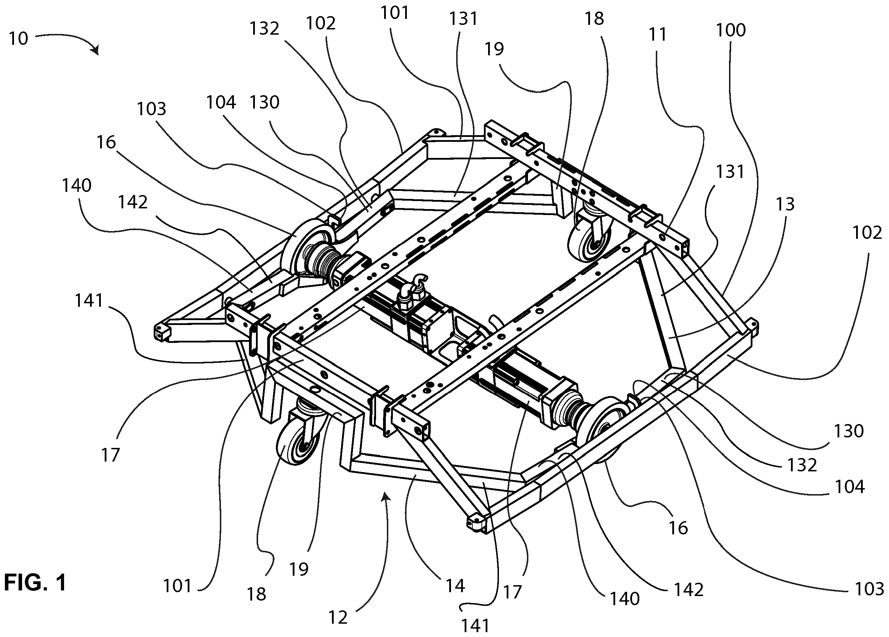

On a illustré sur la **figure 1** par une vue en perspective, un exemple de mode de réalisation d'un chariot à guidage automatique 10 selon l'invention, dédié au transport et/ou à la manutention d'une charge. Ce chariot autoguidé 10 comprend un châssis principal 11 destiné à recevoir une charge supportée par un châssis porteur 12 assurant la liaison au sol du chariot 10.

Ce châssis porteur 12 est constitué d'un premier balancier 13 s'étendant vers l'avant du chariot 10 et d'un deuxième balancier 14 s'étendant vers l'arrière du chariot. Chaque balancier 13, 14 est formé d'un cadre en "U" qui présente deux branches latérales 130, 140 s'étendant chacun selon l'orientation longitudinale du chariot vers l'intérieur de celui-ci.

Le premier balancier 13 est monté sur deux roues motrices 16 à entraînement différentiel dont l'axe est situé dans le plan médian du châssis porteur 12. L'entraînement en rotation des deux roues motrices 16 est assuré par deux moteurs 17 à commandes indépendantes, fixés sur le cadre du premier balancier 13 sensiblement à l'extrémité proximale des deuxième bras 130.

On notera que l'entraînement différentiel des deux roues motrices 16 centrales par les moteurs 17 permet au chariot de se déplacer selon tous types de trajets programmés par un module de commande (non représenté sur la figure 1) telle une ligne droite, une courbe ou encore tourner sur lui-même.

Le premier balancier 13 et le deuxième balancier 14 sont chacun équipés d'une roue folle 18. Ces roues folles 18 sont fixées aux extrémités distales des balanciers 13, 14, dans le plan sagittal du chariot. Pour loger la roue folle, chaque balancier présente un décrochement en "U" 19 qui enjambe cette roue.

Comme on peut le voir sur la figure 1, le châssis principal 11 est formé d'un cadre périphérique 100 qui présente deux traverses 101 reliant deux longerons latéraux 102 sur chacun desquels est soudée, sensiblement au milieu et à l'avant des roues motrices 16, une butée 103.

Pour limiter la course vers le haut du premier balancier 13 au niveau des roues motrices 16, chaque butée 103 présente un ergot 104 surplombant une branche 130 du premier balancier. Ainsi, le point le plus bas de la circonférence des roues motrices 16 qui correspond au point de contact de la bande de roulement avec le sol reste en dessous du point le plus bas du châssis principal 11. Par ailleurs, on évite ainsi que le point le plus haut de la bande de roulement n'entre en contact avec le châssis principal 11 ou la charge. En outre, à l'extrémité distale du chariot, le débattement du premier balancier et du deuxième balancier 14 est limité vers le haut par les traverses 101 du cadre 100 qui font office de butée pour chaque décrochement 19.

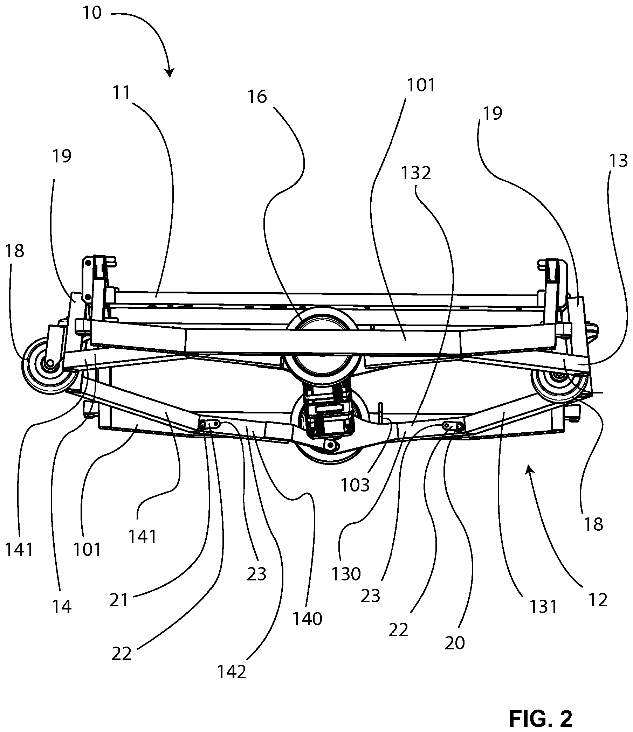

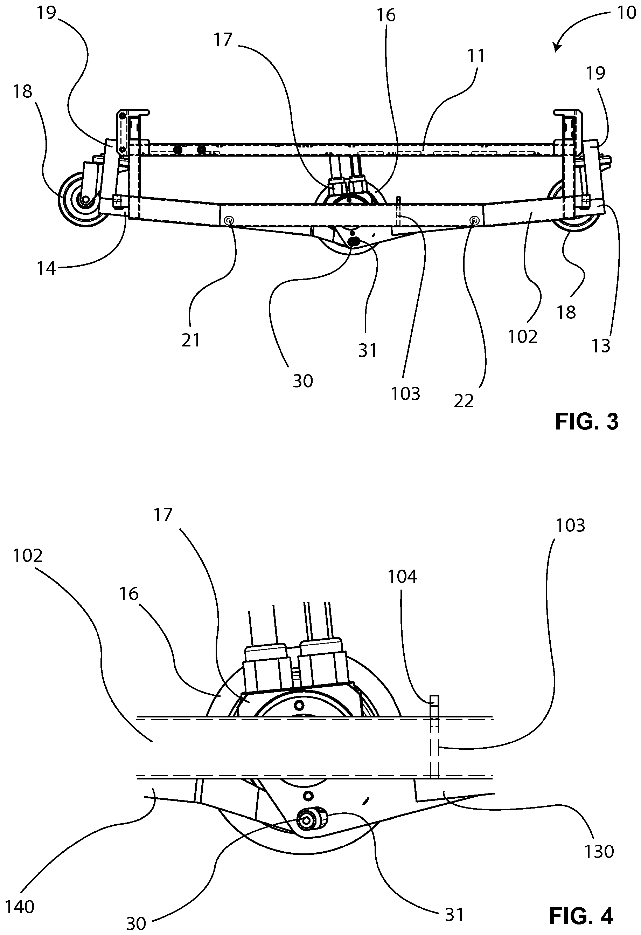

On a représenté sur les **figures 2** **et** **3** le chariot selon une vue en perspective, respectivement vu de dessous et vu de côté, afin de rendre plus claires les points d'articulation entre le châssis principal 11, le premier balancier 13 et le deuxième balancier 14.

Sur la figure 2, on peut voir que chaque balancier 13 ou 14 du châssis porteur 12 est monté pivotant par rapport au châssis principal 11, autour d'une paire d'axes 20 ou 21, fixés au longeron latéral 102 du châssis principal 11 .

Les axes de chaque paire d'axes 20, 21 sont alignés et situés en vis-à-vis de chaque côté du plan sagittal du chariot. Ils présentent à leur extrémité libre une languette 22 formant épaulement, maintenue par une vis 23 à l'un des branches latérales 130, 140.

Comme on peut le voir sur la figure 3, les paires d'axes 20, 21 de pivotement des balanciers 13 et 14 par rapport au châssis principal 11 sont situées sensiblement à mi-distance entre les roues motrices 16 et les points de fixation des deux roues folles 18 aux balanciers 13, 14. Ainsi, la charge est sensiblement répartie à 50 % sur les roues motrices 16 et à 31 % sur chacune des roues folles 18.

Chaque branche latérale 130 ou 140 présente de part et d'autre des axes 20, 21 un premier bras 131, 141, sur lequel est monté une des roues folles 16, et un deuxième bras 132, 142, s'étendant respectivement vers l'extérieur et vers l'intérieur du chariot.

Sur la figure 3, on peut voir que le deuxième balancier 14 est solidarisé et en appui sur le premier balancier 13 sensiblement dans le plan médian transversal du chariot porteur 12. Cet appui est assuré par un doigt 30 fixé à chaque extrémité proximale de chaque branche 140 du deuxième balancier 14. Chaque doigt 30 pénètre dans une lumière qui se présente sous la forme d'un trou oblong 31 dans chaque extrémité proximale de chaque branche 130 du premier balancier 13, sensiblement à l'aplomb de l'axe des roues motrices 16. On remarque également que l'axe longitudinal de chaque trou oblong 31 est orienté sensiblement selon la direction longitudinale de la branche 130. Enfin la longueur des trous oblongs 31 est dimensionnée de sorte à permettre la rotation du premier et du deuxième balancier 13, 14 par rapport au chariot principal 11 dans la limite du débattement autorisé par les traverses 101 et les butées 103..

### 6.2. Autres caractéristiques optionnelles et avantages de l'invention

Dans des variantes du mode de réalisation de l'invention détaillé ci-dessus, il peut également être prévu :
- de répartir différemment la charge entre les roues motrices et les roues folles en déplaçant la position des axes de pivotement des balanciers par rapport au châssis principal, afin de favoriser plutôt la stabilité du chariot ou plutôt l'adhérence des roues motrices ;
- d'équiper chaque balancier de deux roues folles, fixées au corps du balancier dans des positions symétriques par rapport au plan transversal du châssis porteur.

## Revendications

1. Chariot à guidage automatique (10) pour le transport et/ou la manutention d'une charge, comprenant un châssis principal (11) destiné à recevoir ladite charge, ledit châssis principal étant formé d'un cadre périphérique (100) présentant deux traverses (100) reliant deux longerons latéraux (102), d'un châssis porteur (12), le chariot comprenant un premier balancier (13) et un deuxième balancier (14) s'étendant respectivement vers l'avant et l'arrière dudit chariot ou vice-versa,
ledit premier balancier et ledit deuxième balancier étant montés pivotants par rapport au châssis principal respectivement autour d'un premier axe et d'un deuxième axe, ledit premier axe et ledit deuxième axe étant fixés à un longeron latéral dudit châssis principal,
ledit premier balancier présentant un premier bras s'étendant à partir dudit premier axe en direction de l'extérieur dudit chariot, équipé d'au moins une roue folle, et un deuxième bras s'étendant à partir dudit premier axe en direction de l'intérieur dudit chariot, monté sur deux roues à entraînement différentiel (16),
ledit deuxième balancier présentant un premier bras s'étendant à partir dudit deuxième axe en direction de l'extérieur dudit chariot, équipé d'au moins une roue folle et un deuxième bras s'étendant à partir dudit deuxième axe en direction de l'intérieur dudit chariot, le chariot comprenant des moyens de solidarisation du deuxième bras dudit deuxième balancier avec le deuxième bras dudit premier balancier comprenant:
- des moyens d'appui dudit deuxième bras dudit deuxième balancier sur le deuxième bras dudit premier balancier comprenant un doigt s'étendant sensiblement perpendiculairement au deuxième bras dudit deuxième balancier, ou vice-versa au deuxième bras dudit premier balancier, ledit doigt pénétrant au moins partiellement dans une lumière formée dans ledit deuxième bras dudit premier balancier, ou vice versa dans ledit deuxième bras dudit deuxième balancier, plus large que ledit doigt, ou
- au moins une biellette verticale.

2. Chariot à guidage automatique selon la revendication 1, **caractérisé en ce que** ladite lumière est de forme sensiblement oblongue et s'étend sensiblement dans la direction longitudinale du deuxième bras dans lequel elle est formée.

3. Chariot à guidage automatique selon l'une quelconque des revendications 1 et 2, **caractérisé en ce que** ledit doigt comprend un galet destiné à venir en appui sur les bords de ladite lumière.

4. Chariot à guidage automatique selon l'une quelconque des revendications 1 à 3, **caractérisé en ce que** lesdits moyens d'appui sont logés sensiblement à la verticale de l'axe des roues à entrainement différentiel.

5. Chariot à guidage automatique selon la revendication 4, **caractérisé en ce que caractérisé en ce que** lesdits moyens d'appui sont logés sous l'axe desdites deux roues à entraînement différentiel.

6. Chariot à guidage automatique selon l'une quelconque des revendications 1 à 5, **caractérisé en ce qu'**il comprend au moins une butée montée sur ledit châssis principal (11) en vis-à-vis d'un desdits balanciers, destinée à limiter le débattement du châssis porteur (12) par rapport au châssis principal.

7. Chariot à guidage automatique selon l'une quelconque des revendications 1 à 6, **caractérisé en ce que** lesdites deux roues à entraînement différentiel sont entraînées en rotation par deux moteurs (17) commandés de façon indépendante, fixés au même balancier que lesdites roues à entraînement différentiel.

8. Chariot à guidage automatique selon l'une quelconque des revendications 1 à 7, **caractérisé en ce qu'**au moins un desdits balanciers est équipé de deux roues folles montées sur celui-ci dans des positions symétriques par rapport au plan sagittal dudit chariot.

9. Chariot à guidage automatique selon l'une quelconque des revendications 1 à 8, **caractérisé en ce que** la position dudit premier axe et la position dudit deuxième axe sont symétriques par rapport au plan médian dudit chariot.

## Patentansprüche

1. Automatisch geführter Wagen (10) zum Transportieren und/oder Handhaben einer Last, der ein Hauptfahrgestell (11) das zur Aufnahme der Last bestimmt ist, und ein tragende Fahrgestell (12) umfasst, wobei das Hauptfahrgestell von einem peripheren Rahmen (100) gebildet ist, der zwei Querträger (100) aufweist, die zwei seitliche Längsträger (102) verbinden, wobei der Wagen eine erste Schwinge (13) und eine zweite Schwinge (14) umfasst, die sich jeweils vor und hinter dem Wagen oder umgekehrt erstrecken,
wobei die erste Schwinge und die zweite Schwinge im Verhältnis zum Hauptfahrgestell jeweils um eine erste Achse und um eine zweite Achse schwenkend angebracht sind, wobei die erste Achse und die zweite Achse an einem seitlichen Längsträger des Hauptfahrgestells befestigt sind,
wobei die erste Schwinge einen ersten Arm aufweist, der sich ab der ersten Achse nach außerhalb des Wagens erstreckt, der mit mindestens einem Laufrad ausgestattet ist, und einen zweiten Arm, der sich ab der ersten Achse nach innerhalb des Wagens erstreckt, der auf zwei Rädern mit Differentialantrieb (16) angebracht ist,
wobei die zweite Schwinge einen ersten Arm aufweist, der sich ab der zweiten Achse nach außerhalb des Wagens erstreckt, der mit mindestens einem Laufrad ausgestattet ist, und einen zweiten Arm, der sich ab der zweiten Achse nach innerhalb des Wagens erstreckt,
wobei der Wagen Befestigungsmittel des zweiten Arms der zweiten Schwinge am zweiten Arm der ersten Schwinge umfasst, umfassend:
- Stützmittel des zweiten Arms der zweiten Schwinge auf dem zweiten Arm der ersten Schwinge, die einen Finger umfassen, der sich etwa senkrecht zum zweiten Arm der zweiten Schwinge oder umgekehrt zum zweiten Arm der ersten Schwinge erstreckt, wobei der Finger mindestens teilweise in eine im zweiten Arm der ersten Schwinge oder umgekehrt im zweiten Arm der zweiten Schwinge ausgebildete Öffnung eindringt, die breiter als der Finger ist, oder
- mindestens eine vertikale Stange.

2. Automatisch geführter Wagen nach Anspruch 1, **dadurch gekennzeichnet, dass** die Öffnung etwa länglich geformt ist und sich etwa in der Längsrichtung des zweiten Arms erstreckt, in dem sie ausgebildet ist.

3. Automatisch geführter Wagen nach einem der Ansprüche 1 und 2, **dadurch gekennzeichnet, dass** der Finger eine Rolle umfasst, die bestimmt ist, sich auf den Rändern der Öffnung abzustützen.

4. Automatisch geführter Wagen nach einem der Ansprüche 1 bis 3, **dadurch gekennzeichnet, dass** die Stützmittel etwa in der Vertikalen der Achse der Räder mit Differentialantrieb untergebracht sind.

5. Automatisch geführter Wagen nach Anspruch 4, **dadurch gekennzeichnet, dass** die Stützmittel unter der Achse der zwei Räder mit Differentialantrieb untergebracht sind.

6. Automatisch geführter Wagen nach einem der Ansprüche 1 bis 5, **dadurch gekennzeichnet, dass** er mindestens einen Anschlag umfasst, der auf dem Hauptfahrgestell (11) gegenüber einer der Schwingen angebracht ist, der bestimmt ist, den Ausschlag des tragenden Fahrgestells (12) im Verhältnis zum Hauptfahrgestell zu begrenzen.

7. Automatisch geführter Wagen nach einem der Ansprüche 1 bis 6, **dadurch gekennzeichnet, dass** die zwei Räder mit Differentialantrieb von zwei unabhängig gesteuerten Motoren (17) rotatorisch angetrieben werden, die an der gleichen Schwinge wie die Räder mit Differentialantrieb befestigt sind.

8. Automatisch geführter Wagen nach einem der Ansprüche 1 bis 7, **dadurch gekennzeichnet, dass** mindestens eine der Schwingen mit zwei Laufrädern ausgestattet ist, die auf dieser in symmetrischen Positionen im Verhältnis zur sagittalen Ebene des Wagens angebracht sind.

9. Automatisch geführter Wagen nach einem der Ansprüche 1 bis 8, **dadurch gekennzeichnet, dass** die Position der ersten Achse und die Position der zweiten Achse im Verhältnis zur Mittelebene des Wagens symmetrisch ist.

## Claims

1. An automated guided trolley for transporting and/or handling a load, comprising a main frame (11) for receiving said load, said main frame (11) being made of a peripheral frame (100) with two cross members (101) connecting two side longitudinal members (102), and a supporting frame (12),
said trolley comprising a first walking beam (13) and a second walking beam (14) extending respectively forward and backward of said trolley or vice versa, said first and second walking beams being pivotally mounted with respect to the main frame respectively about a first axis and a second axis, said first axis and said second axis being fixed to a side longitudinal member of the main frame,
said first walking beam having a first arm extending from said first axis towards the outside of said trolley, equipped with at least one idler wheel, and a second arm extending from said first axis towards the inside of said trolley, mounted on two differential drive wheels (16),
said second walking beam having a first arm extending from said second axis towards the outside of said trolley, equipped with at least one idler wheel and a second arm extending from said second axis towards the inside of said trolley,
said trolley comprising means for securing the second arm of said second walking beam to the second arm of said first walking beam comprising:
- means for supporting said second arm of said second walking beam on the second arm of said first walking beam comprising a pin extending substantially perpendicular to the second arm of said second walking beam, or vice versa to the second arm of said first walking beam, said pin at least partially penetrating into a hole formed in said second arm of said first walking beam, or vice versa in said second arm of said second walking beam, wider than said pin, or
- at least a vertical connecting rod.

2. An automated guided trolley according to claim 1, **characterised in that** said hole is substantially oblong in shape and extends substantially in the longitudinal direction of the second arm in which it is formed.

3. An automated guided trolley according to any of claims 1 and 2, **characterised in that** said pin comprises a roller intended to rest on the edges of said hole.

4. An automated guided trolley according to any of claims 1 to 3, **characterised in that** said supporting means are housed substantially vertically on the axis of the differential drive wheels.

5. An automated guided trolley according to claim 4, **characterised in that** said supporting means are housed under the axis of said two differential drive wheels.

6. An automated guided trolley according to any of claims 1 to 5, **characterised in that** it comprises at least one stop mounted on said main frame (11) opposite one of said walking beams, intended to limit the articulation of the supporting frame (12) with respect to the main frame.

7. An automated guided trolley according to any of claims 1 to 6, **characterised in that** said two differential drive wheels are driven in rotation by two independently controlled motors, fixed to the same walking beams as the differential drive wheels.

8. An automated guided trolley according to any of claims 1 to 7, **characterised in that** at least one of said walking beams is equipped with two idler wheels (28) mounted thereon in positions symmetrical with respect to the sagittal plane of said trolley.

9. An automated guided trolley according to any of claims 1 to 8, **characterised in that** the position of said first axis and the position of said second axis are symmetrical with respect to the median plane of said trolley.
